# DEMANDE DE BREVET EUROPEEN

(11) **EP 2 154 383 A1**
(43) Date de publication de la demande: **17.02.2010**
(21) Numéro de dépôt: 09163854.4
(22) Date de dépôt: 26.06.2009
(51) Int. Cl.: F16B 5/00, F16B 11/00, B29C 65/48, B63J 2/12

(54) **Procédé de fixation d'un équipement sur une paroi intérieure d'un navire**

(30) Priorité: 04.08.2008 FR 0855405
(71) Demandeur: DCNS, 75015 Paris (FR)
(72) Inventeur: Lagree, Renan, 56400, Le Bono (FR); Le Beherec, Paul, 56660, Lanester (FR)
(74) Mandataire: Blot, Philippe Robert Emile

(57) **Abrégé**

Procédé de fixation d'un équipement sur une paroi d'un navire, **caractérisé en ce qu**'il met en oeuvre au moins une attache intermédiaire présentant une face murale, destinée à être fixée contre ladite paroi, et une face de support, sur laquelle doit être fixé ledit équipement, et en ce qu'il comporte les étapes consistant à :
- préparer une zone de la paroi pour l'implantation de l'attache intermédiaire ;
- encoller la face murale de l'attache intermédiaire avec une colle polyuréthane ;
- poser l'attache intermédiaire encollée sur la zone d'implantation, dans une position relative prédéterminée ; et, après polymérisation de la colle,
- fixer le matériel sur la face de support de l'attache intermédiaire en utilisant des moyens de fixation.

## Description

L'invention a pour domaine celui des procédés de fixation d'un petit équipement sur une paroi intérieure d'un navire. Par le terme « petit équipement », on entend, dans ce qui suit, un équipement ayant une masse inférieure à 50 kg environ.

Lors de la construction d'un navire, après que la superstructure de celui-ci a été fabriquée, intervient une étape de pose d'un grand nombre de petits équipements de nature variée. Il peut s'agir d'équipements électriques, tels qu'une prise, un compteur, un écran de contrôle, une console de commande ou l'équivalent, d'équipements hydrauliques, tels que des canalisations, des pompes, des conteneurs ou l'équivalent, ou d'autres types d'équipements.

La fixation de ces petits équipements est une étape particulièrement longue de la construction d'un navire.

Jusqu'à présent, et pour la majeure partie de ces petits équipements, la fixation se fait par soudure sur la paroi. Or, la paroi sur laquelle doit être implanté le petit équipement est mise en peinture, avec une peinture anticorrosion, avant que l'équipement y soit fixé. En conséquence, l'opérateur doit commencer par décaper une zone de la paroi pour l'implantation de l'équipement, avant de réaliser l'étape de soudure de l'équipement sur la zone décapée.

La mise en oeuvre de l'étape de soudure requiert que le volume dans lequel travail l'opérateur soit correctement ventilé. Il n'est pas toujours possible de respecter cette contrainte de travail, en particulier dans le domaine de la construction navale.

Après que l'équipement a été fixé à la paroi, il est nécessaire d'effectuer une reprise de peinture autour de l'équipement implanté pour protéger la soudure réalisée contre la corrosion.

Par ailleurs, la qualité de la soudure réalisée dépend de l'attention qu'y a apportée l'opérateur. De plus la soudure évolue au cours du temps. Tout défaut dans la soudure peut conduire à la désolidarisation de l'équipement, et dans des situations extrêmes, à la chute de cet équipement. Cela peut avoir des conséquences graves, amplifiées par le fait qu'on se trouve à bord d'un navire.

L'invention a pour but de pallier les problèmes précités.

A cet effet, l'invention a pour objet un procédé de fixation d'un équipement sur une paroi d'un navire, qui met en oeuvre au moins une attache intermédiaire en un matériau composite présentant une face murale, destinée à être fixée contre ladite paroi, et une face de support, sur laquelle doit être fixé ledit équipement, et qui comporte les étapes consistant à :
- préparer une zone de la paroi pour l'implantation de l'attache intermédiaire ;
- encoller la face murale de l'attache intermédiaire avec une colle, de préférence du type mastic ;
- poser l'attache intermédiaire encollée sur la zone d'implantation, dans une position prédéterminée ; et, après polymérisation de la colle,
- fixer l'équipement sur la face de support de l'attache intermédiaire en utilisant des moyens de fixation.

Suivant des modes particuliers de l'invention, le procédé comporte une ou plusieurs des caractéristiques suivantes, prise(s) isolément ou suivant toutes les combinaisons techniquement possibles :
- la paroi étant métallique et peinte, l'étape de préparation de la zone d'implantation consiste à :

- poncer, au moins superficiellement, la peinture de la zone d'implantation ; et,
- dégraisser la zone d'implantation ;
- l'étape de pose de l'attache intermédiaire est suivie d'une étape de mise en pression de l'attache intermédiaire contre la paroi, pour obtenir une bonne adhérence ;
- le procédé débute par une étape consistant à débiter un profilé à la longueur requise pour obtenir une attache intermédiaire adaptée aux dimensions du et au poids de l'équipement à fixer.

L'invention a également pour objet un kit de fixation d'un équipement sur une paroi d'un navire, qui comporte : un profilé en un matériau composite ; de la colle apte à fixer à ladite paroi une attache intermédiaire débitée dans ledit profilé ; des moyens de fixation de l'équipement sur ladite attache intermédiaire.

Suivant des modes particuliers de l'invention, le kit comporte une ou plusieurs des caractéristiques suivantes, prise(s) isolément ou suivant toutes les combinaisons techniquement possibles :
- la colle est du type mastic, et présente, de préférence, un caractère thixotrope ;
- lesdits moyens de fixation sont choisis dans le groupe comportant les vis auto perforantes et les ensembles vis - écrous ;
- le profilé est en un matériau composite, de préférence en verre/polyester pultrudé.

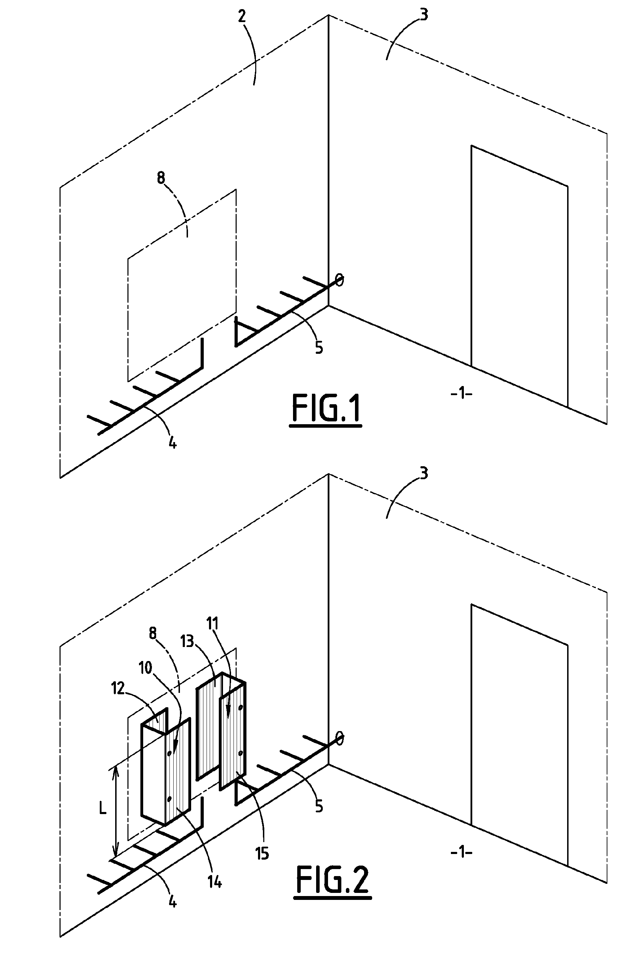

L'invention et ses avantages seront mieux compris à la lecture de la description qui va suivre, donnée uniquement à titre d'exemple, et faite en se référent aux dessins annexés, dans lesquels les figures 1 à 3 représentent, respectivement, différentes étapes du procédé de fixation d'un petit équipement sur une paroi d'un local d'un navire.

Le procédé de fixation consiste à interposer, entre l'équipement et la paroi une attache intermédiaire qui, d'une part est collée à la paroi, et d'autre part, reçoit l'équipement par la mise en oeuvre de moyens de fixation standard.

En se référant à la figure 1, un local 1 d'un navire est délimité par des parois 2, 3, qui sont métalliques et recouvertes d'une couche de peinture anticorrosion.

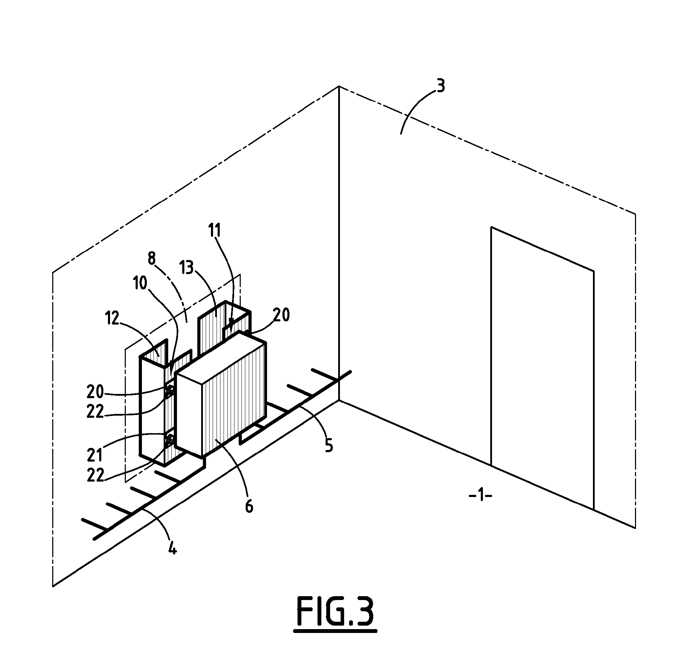

Pour connecter électriquement entre elles deux sections 4 et 5 d'un circuit électrique, on souhaite fixer, sur la paroi 2, un boîtier électrique de raccordement 6 (représenté à la figure 3).

L'opérateur débute le procédé de fixation en ponçant, tout au moins superficiellement, une zone d'implantation 8 de la paroi 2 où doit être implanté le boîtier 6.

Puis, l'opérateur dégraisse la zone d'implantation 8. Pour cela, il frotte la zone 8 avec un chiffon imbibé de préférence d'une solution d'alcool isopropilique diluée à 50%.

L'opérateur débite ensuite une longueur d'un profilé pour former des première et seconde attaches intermédiaires 10 et 11, représentées à la figure 2. De préférence, le profilé est en un matériau composite léger, par exemple un composite de polyester isophtalique, tel que du verre/polyester pultrudé. Dans le mode de réalisation décrit ici en détail, le profilé a une section en « U ». La longueur L de chaque attache intermédiaire 10, 11 est choisie pour être adaptée aux dimensions et au poids du boîtier 6 à fixer. L'attache 10, respectivement l'attache 11, en « U » comporte une première rive dont la face extérieure constitue une face murale 12, 13, et une seconde rive dont la face extérieure constitue une face de support 14, 15. La face murale 12, respectivement 13, est destinée à venir en appui de la paroi 2, tandis que la face de support 14, respectivement 15, est destinée à supporter le petit équipement, ici le boîtier 6.

Après avoir débité les attaches intermédiaires 10 et 11, l'opérateur encolle leurs faces murales 12 et 13. Pour se faire, l'opérateur utilise une colle certifiée « construction navale », c'est-à-dire présentant des caractéristiques de résistance au feu compatibles avec les contraintes et les normes maritimes. La colle est adaptée à la fixation du matériau de l'attache sur le matériau de la paroi (peinture, métal, etc.) Avantageusement, la colle est du type mastic, c'est-à-dire qu'elle présente une viscosité élevée permettant le maintien de l'attache sur la paroi sans qu'il soit nécessaire d'appliquer une pression supplémentaire durant le temps de prise de la colle. De manière encore plus avantageuse, la colle présente un caractère thixotrope : elle est capable de passer d'un état visqueux à un état liquide lorsqu'on l'agite, puis de retrouver cet état visqueux après un certain temps de repos. Ainsi, après que la colle a été agitée mécaniquement, l'application de la colle sur l'attache en est facilitée. Une colle polyuréthane, telle que la colle SIKAFLEX 296, est un exemple de colle présentant cette propriété caractéristique.

L'attache intermédiaire 10 est présentée puis appliquée sur la zone d'implantation 8 de la paroi 2. Pour la pose, l'opérateur positionne l'attache 10 à un endroit prédéterminé sur la paroi 2. Il n'est pas nécessaire que l'attache intermédiaire soit positionnée avec une grande précision sur la paroi 2.

Eventuellement, une fois que l'attache se trouve dans la position recherchée, une pression est appliquée sur l'attache l'intermédiaire 10 de manière à ce qu'elle adhère à la paroi 2. Cette étape n'est pas obligatoire lorsqu'une colle polyuréthane est utilisée car l'attache intermédiaire en matériau composite est légère et ne risque pas de glisser durant le temps de polymérisation de la colle.

Avant de poursuivre le procédé de fixation, l'opérateur attend la polymérisation complète de la colle. En utilisant la colle mentionnée ci-dessus, le temps de prise complète est d'au moins une demi journée.

Une fois la colle polymérisée, le procédé se poursuit avec la fixation du boîtier 6 sur les attaches 10 et 11 collées à la paroi 2. Pour cela, le boîtier électrique 6 comporte deux paires de pattes de fixation. Sur la figure 3, seule la paire de patte de fixation 20, 21 équipant la partie droite du boîtier 6 est représentée.

Après avoir positionné le boîtier 6 avec précision contre les attaches intermédiaires 10 et 11, l'opérateur utilise des vis auto perforantes en tant que moyen de fixation. Plus précisément, une vis auto-perforante 22, 23 est insérée dans un orifice de réception d'une des pattes de fixation 20, 21 du boîtier 6, puis vissée de telle sorte qu'elle pénètre d'elle-même dans la face de support 14, 15 de l'attache intermédiaire 10, 11. Après serrage des vis, le boîtier 6 est effectivement fixé sur les attaches intermédiaires 10 et 11.

Il ne reste plus qu'à connecter les sections 4 et 5 du circuit électrique au boîtier 6 d'une manière connue en soi.

En variante, le moyen de fixation du petit équipement sur les attaches intermédiaires est constitué par un ensemble vis - écrou. Dans ce cas, l'opérateur pratique un trou dans la face de support de l'attache intermédiaire. Il insère ensuite la tige de la vis à travers un orifice d'une patte de fixation du petit équipement et un trou de l'attache intermédiaire. Il finalise la fixation en vissant un écrou sur l'extrémité libre de la tige.

L'homme du métier constatera que l'utilisation d'attaches intermédiaires qui sont collées à la paroi est un procédé de fixation simple à mettre en oeuvre, tout en répondant aux critères de tenue aux chocs imposés par la construction de navires de tout types, et en particulier de navires militaires. Les performances de tenue à l'arrachement de l'attache collée sont du même ordre que celles de la peinture anti corrosion recouvrant la zone d'implantation.

L'homme de métier constatera également qu'un tel procédé de fixation permet le remplacement facile d'un équipement détérioré, la modification aisée du schéma d'implantation et évite les reprises de peinture sur la paroi.

## Revendications

1. Procédé de fixation d'un équipement (6) sur une paroi (2) d'un navire, **caractérisé en ce qu'**il met en oeuvre au moins une attache intermédiaire (10, 11) en un matériau composite présentant une face murale (12, 13), destinée à être fixée contre ladite paroi, et une face de support (14, 15), sur laquelle doit être fixé ledit équipement, et **en ce qu'**il comporte les étapes consistant à :
- préparer une zone (8) de la paroi pour l'implantation de l'attache intermédiaire ;
- encoller la face murale de l'attache intermédiaire avec une colle, de préférence une colle du type mastic ;
- poser l'attache intermédiaire encollée sur la zone d'implantation, dans une position prédéterminée ; et, après la prise de la colle,
- fixer l'équipement sur la face de support de l'attache intermédiaire en utilisant des moyens de fixation (20, 21, 22).

2. Procédé selon les revendications 1, **caractérisé en ce que** la paroi (2) étant métallique et peinte, l'étape de préparation de la zone d'implantation consiste à :
- poncer, au moins superficiellement, la peinture de la zone (8) d'implantation ; et,
- dégraisser la zone d'implantation.

3. Procédé selon la revendication 1 ou la revendication 2, **caractérisé en ce que** l'étape de pose de l'attache intermédiaire (10, 11) est suivie d'une étape de mise en pression de l'attache intermédiaire contre la paroi (2), pour obtenir une bonne adhérence.

4. Procédé selon l'une quelconque des revendications précédentes, **caractérisé en ce qu'**il débute par une étape consistant à débiter un profilé à la longueur requise pour obtenir une attache intermédiaire (10, 11) adaptée aux dimensions du et au poids de l'équipement (6) à fixer.

5. Kit de fixation d'un équipement (6) sur une paroi (2) d'un navire, **caractérisé en ce qu'**il comporte :
- au moins un profilé en un matériau composite;
- de la colle apte à fixer sur ladite paroi une attache intermédiaire (10, 11) débitée dans ledit profilé ;
- des moyens de fixation (20, 21, 22) de l'équipement sur ladite attache intermédiaire.

6. Kit de fixation selon la revendication 5, **caractérisé en ce que** la colle est du type mastic, et présente, de préférence, un caractère thixotrope.

7. Kit de fixation selon la revendication 5 ou la revendication 6, **caractérisé en ce que** lesdits moyens de fixation sont choisis dans le groupe comportant les vis auto perforantes et les ensembles vis - écrous.

8. Kit de fixation selon l'une quelconque des revendications 5 à 7, **caractérisé en ce que** ledit profilé est en un matériau composite, de préférence en verre/polyester pultrudé.
